(19) Europäisches Patentamt
European Patent Office
Office européen des brevets

(11) **EP 4 537 444 B1**

(12) **EUROPEAN PATENT SPECIFICATION**

(45) Date of publication and mention
of the grant of the patent:
**04.03.2026 Bulletin 2026/10**

(21) Application number: **23733866.0**

(22) Date of filing: **06.06.2023**

(51) International Patent Classification (IPC):
***H02K 15/00*** (2025.01)

(52) Cooperative Patent Classification (CPC):
**H02K 15/36**

(86) International application number:
**PCT/EP2023/065049**

(87) International publication number:
**WO 2023/237513 (14.12.2023 Gazette 2023/50)**

(54) **ASSEMBLY FOR MINIMIZING THE SPRINGBACK OF ELECTRICAL WIRES IN APPARATUSES FOR TWISTING SAID WIRES**

ANORDNUNG ZUR MINIMIERUNG DES RÜCKSPRINGENS VON ELEKTRISCHEN DRÄHTEN BEI VORRICHTUNGEN ZUM VERDREHEN DIESER DRÄHTE

ENSEMBLE POUR RÉDUIRE AU MINIUM LE RETOUR ÉLASTIQUE DE FILS ÉLECTRIQUES DANS DES APPAREILS DESTINÉS À TORSADER LESDITS FILS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.06.2022 IT 202200011924**

(43) Date of publication of application:
**16.04.2025 Bulletin 2025/16**

(73) Proprietor: **ATOP S.p.A.**
**50028 Barberino Tavarnelle (IT)**

(72) Inventors:
• **CORBINELLI, Rubino**
**53036 POGGIBONSI, Frazione Staggia Senese (IT)**
• **NOCCIOLINI, Daniele**
**50142 FIRENZE (IT)**
• **ROSSI, Federico**
**50028 BARBERINO TAVARNELLE (IT)**
• **STRANO, Matteo**
**20133 MILANO (IT)**
• **FARIOLI, Daniele**
**20133 MILANO (IT)**

(74) Representative: **Modiano, Micaela Nadia et al**
**Modiano & Partners**
**Via Meravigli, 16**
**20123 Milano (IT)**

(56) References cited:
**EP-A1- 3 700 070    JP-A- 2013 039 001
JP-A- 2022 035 822    US-A1- 2022 037 970**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an assembly for minimizing the springback of electrical wires in apparatuses for twisting such wires.

Twisting apparatuses operate on conducting elements (conductors of electricity, i.e. elements that are electrically conductive) that are intended to constitute the inductive windings (or spools) of electric machines, such as motors, generators and, in general, any other type of electric machine. In the present discussion, the term "wires" will be used to mean any electrical conductor or any respective substantially elongated portion of a specific electrical conductor, independently of its shape and of its geometric characteristics. A twisting apparatus operating on windings of an electric machine is known from JP 2013 039001 A.

Each conducting element will be shaped like a fork, normally called a "hairpin" in the jargon used in the sector, and will conveniently be inserted into the slots of a ferromagnetic core of either a stator or a rotor of an electric machine. The fork has two straight shanks (substantially parallel) which are mutually connected by a cross-piece. Overall, each fork is shaped approximately like an upturned U with the contoured bridge (which constitutes the "head" of the fork) shaped like a cusp. Each shank has a free end for inserting the fork into the slots of a core, such as an inductor or an armature of an electric machine.

The insertion occurs by inserting the free ends of the conductive elements through longitudinal openings of the slots and making them slide until they come out at the other end of the ferromagnetic core, so that they reach a predefined external protrusion of the shanks. So at one end of the ferromagnetic core, the bridges of the forks remain outside, while at the other end of the ferromagnetic core the free ends remain outside.

After insertion, the free ends must be bent (twisting step) in order to be arranged in predetermined positions, at which they are connected with other free ends of other conductive elements (forks) via welding (according to the topology of the electric winding to be provided). The free ends of separate shanks must therefore be arranged according to criteria for mutual alignment that make the welding operations simple and which ensure a high stability of the coupling. Such alignments are achieved using twisting apparatuses which deform the shanks of the fork, which protrude from the ferromagnetic core, aligning shanks of separate forks with each other for the purpose of facilitating their coupling (in general, welding).

However, due to the intrinsic elasticity of the fork material, the shanks of said forks feature a springback behaviour after the deformation generated by the twisting apparatus by tending to return with regards to the twisting force they have been subject to, which compromises the quality of the alignments obtained, in some cases making it more difficult to couple corresponding ends of shanks of different forks.

This problem is particularly detrimental because it does not allow to be certain that the coupling of the ends of the shanks is executed in accordance with predefined quality standards: it must be noted that a poor quality coupling can compromise the correct operation of the electric machine that contains the winding owing to possible overheating phenomena.

Specific research projects have shown that the greater is the springback of the shanks of the forks, after the operation of twisting them, the greater is their play in the slot of the ferromagnetic core in which they are accommodated.

However, it is not possible to reduce the dimensions of the slots of the ferromagnetic core in order to render the springback of the shanks negligible, because that would make the insertion of the shanks of the forks (hairpins) into those slots excessively complex (in some cases it would actually be impossible to perform this operation using automatic machines).

Therefore, through all conventional devices, including trying to reduce, as far as possible, the existing play between each slot and the shanks of the forks contained in it, it is not possible to make the springback of the shanks of the forks negligible after the twisting operation, thus complicating considerably the subsequent operations for their welding according to established procedures.

The aim of the present invention is to solve the above mentioned drawbacks, by providing an assembly for minimizing the springback of electrical wires in apparatuses for twisting such wires that ensures an optimal alignment of the wire end portions of corresponding shanks/wires of separate forks made of conducting material which are arranged in the slots of a ferromagnetic core.

Within this aim, an object of the invention is to provide an assembly for minimizing the springback of electrical wires in apparatuses for twisting such wires that ensures a stable alignment of the ends of corresponding shanks/wires of separate forks made of conducting material which are arranged in the slots of a ferromagnetic core.

Another object of the invention is to provide an assembly for minimizing the springback of electrical wires in apparatuses for twisting such wires that facilitates operations for coupling (welding) corresponding ends of shanks/wires of separate forks made of conducting material.

Another object of the invention is to provide an assembly for minimizing the springback of electrical wires in apparatuses for twisting such wires that makes the coupling (welding) of corresponding ends of shanks of separate forks made of conducting material more stable and accurate.

Another object of the present invention is to provide an assembly for minimizing the springback of electrical wires in apparatuses for twisting such wires which is of low cost, easily and practically implemented and safe in use.

This aim and these objects are achieved by an assembly for minimizing the springback of electrical wires in apparatuses for twisting such wires according to claim 1.

This aim and these objects are also achieved by a method for twisting the wires that constitute windings of electric machines according to claim 8.

Further characteristics and advantages of the invention will become better apparent from the detailed description that follows of a preferred, but not exclusive, embodiment of the assembly for minimizing the springback of electrical wires in apparatuses for twisting such wires, which is illustrated by means of non-limiting example in the accompanying drawings wherein:

Figure 1 is a schematic perspective view, shown from a point of view arranged in an upper region, of a possible embodiment of an assembly for minimizing the springback of electrical wires in apparatuses for twisting such wires, according to the invention, in a first step of the method according to the invention;

Figure 2 is a schematic perspective view, shown from a point of view arranged in a lower region, of the assembly of Figure 1 in a first step of the method according to the invention;

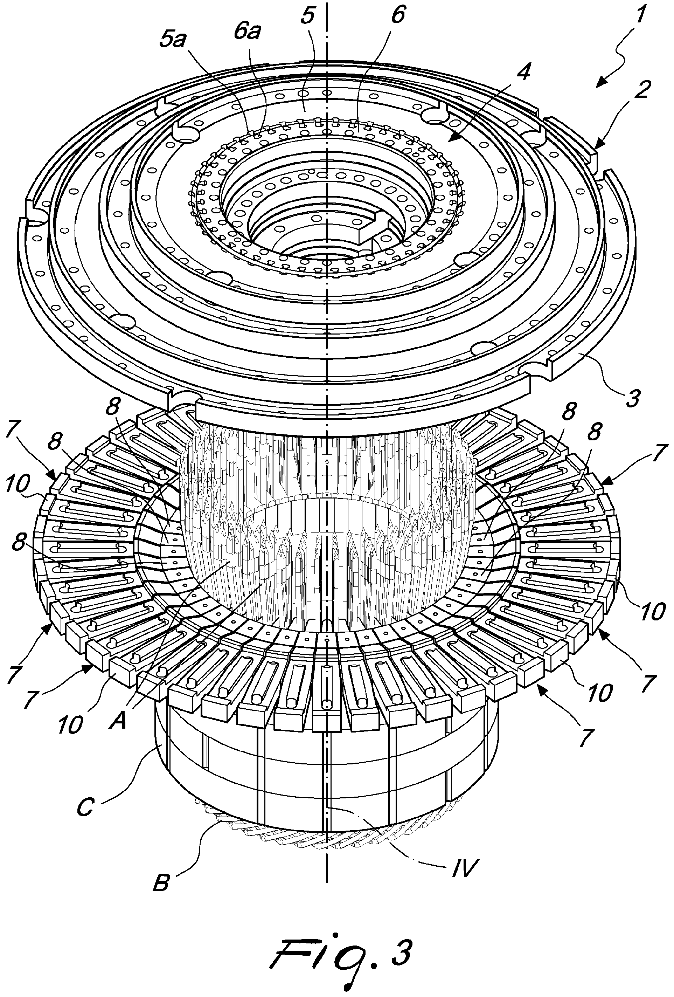

Figure 3 is a schematic perspective view, shown from a point of view arranged in a lower region, of the assembly of Figure 1 in a second step of the method according to the invention;

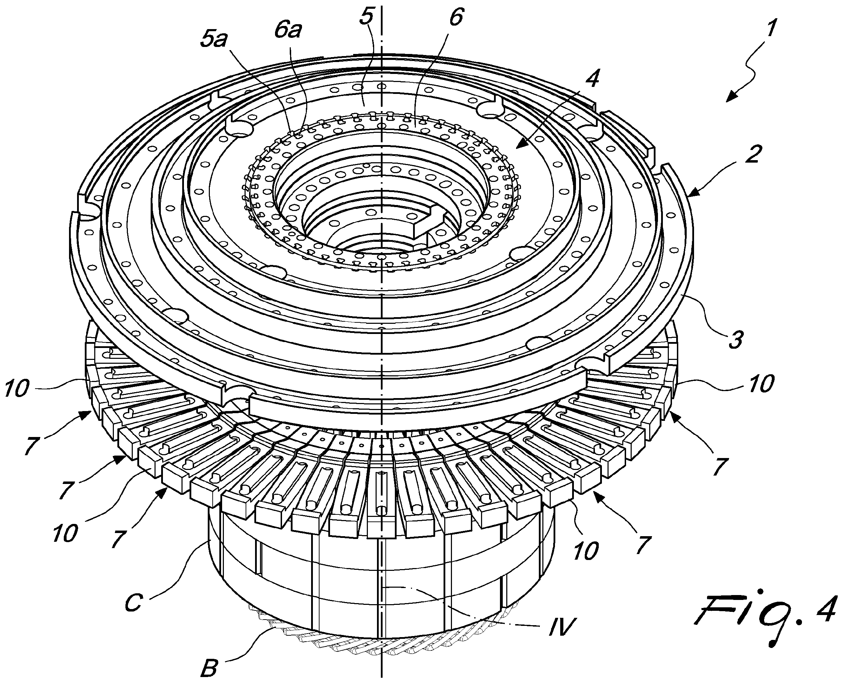

Figure 4 is a schematic perspective view, shown from a point of view arranged in a lower region, of the assembly of Figure 1 in a third step of the method according to the invention;

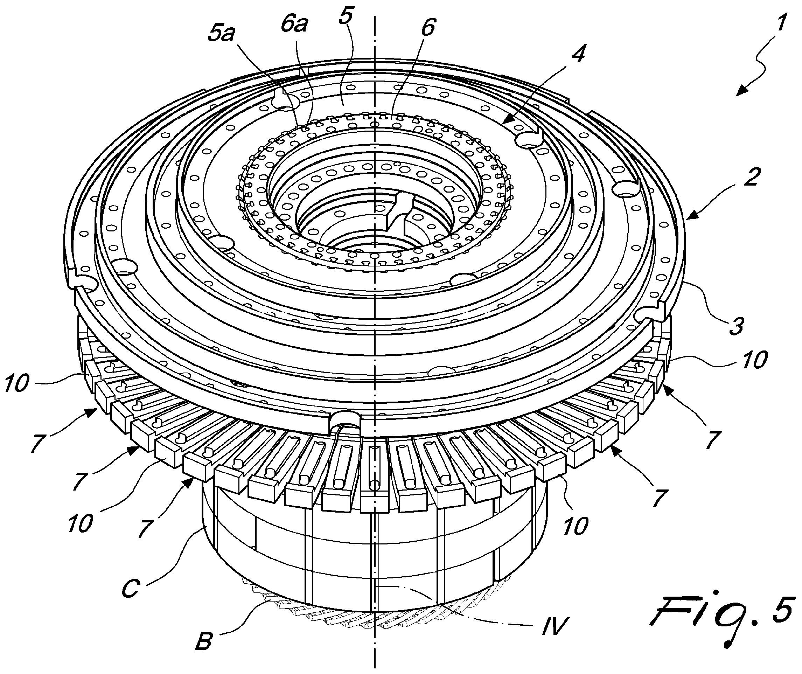

Figure 5 is a schematic perspective view, shown from a point of view arranged in a lower region, of the assembly of Figure 1 in a fourth step of the method according to the invention;

Figure 6 is a schematic perspective view, shown from a point of view arranged in a lower region, of the assembly of Figure 1 in a fifth step of the method according to the invention;

Figure 7 is a schematic perspective view, shown from a point of view arranged in a lower region, of the assembly of Figure 1 in a sixth step of the method according to the invention, in which the wires have been completely subjected to twisting;

Figure 8 is a schematic perspective view of a pusher provided with a shoulder in abutment against wires that protrude from a respective seat of the ferromagnetic core of a stator of an electric machine;

Figure 9 is a schematic side view of the pusher, the wires and the ferromagnetic core of Figure 8;

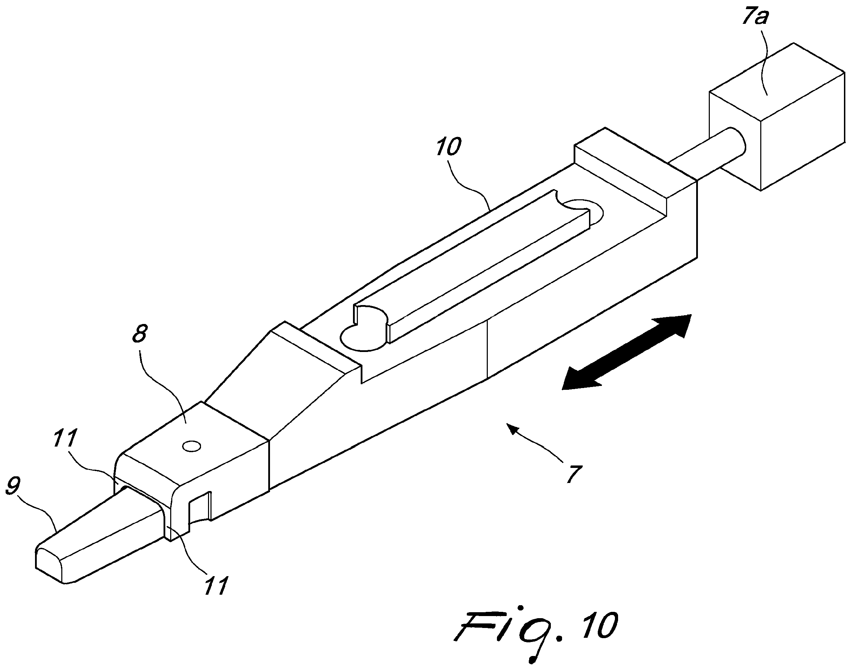

Figure 10 is a schematic perspective view of an enlarged pusher of the type shown in the previous figures.

With particular reference to the figures, the reference numeral 1 generally designates an assembly for minimizing the springback of electrical wires A (in particular of their wire end portions T) of a winding B arranged on a ferromagnetic core C in respective seats D, for twisting apparatuses 2.

The apparatuses 2 for twisting wire end portions T of wires, to which the present invention refers, comprise a fixed body 3 (which will generally be rigidly coupled to the fixed frame of the twisting apparatus 2) on which a carousel 4 can rotate which is provided with at least one pair of seats designed to temporarily accommodate wire end portions T of respective wires A (so as to be able to subject them to the twisting operations). The remaining part of the wires A will be accommodated in specific slots of a ferromagnetic core C which will constitute a part of the electric machine (motor, generator, transformer, etc.) being built, typically a stator. The carousel 4 comprises at least two bushings 5, 6 which are circular in cross-section (in the technical jargon of the sector the bushings 5, 6 are termed twisting rings), and are mutually concentric and provided with respective channels 5a, 6a (which define the temporary accommodation seats of the wires A; in practice each seat can be identified as the space delimited by two contiguous channels 5a, 6a) which are substantially parallel to the axis of symmetry IV of the carousel 4 and each defines at least one receptacle, which is, indeed, configured to partially accommodate at least one wire end portion T of at least one respective wire A that protrudes from the seat D of a ferromagnetic core C. Each receptacle will be open on a side directed toward the at least one contiguous bushing 5, 6 (or 6, 5).

The at least two bushings 5, 6 will be usefully configured to be made rotate so as to perform the twisting of the wire end portions T of wires A that protrude from the seats D of the ferromagnetic core C and are partially accommodated in the channels 5a, 6a.

The assembly 1, in addition to the twisting apparatus 2, according to the invention profitably comprises a plurality of radial pushers 7 which are arranged circumferentially and are configured to be positioned axially between the ferromagnetic core C and the carousel 4, in a configuration of substantial alignment with the spaces defined between wires A that can be arranged in contiguous channels 5a, 6a.

Such pushers 7 are advantageously provided with a terminal element 9 and with a shoulder 8 that is contiguous with said element 9.

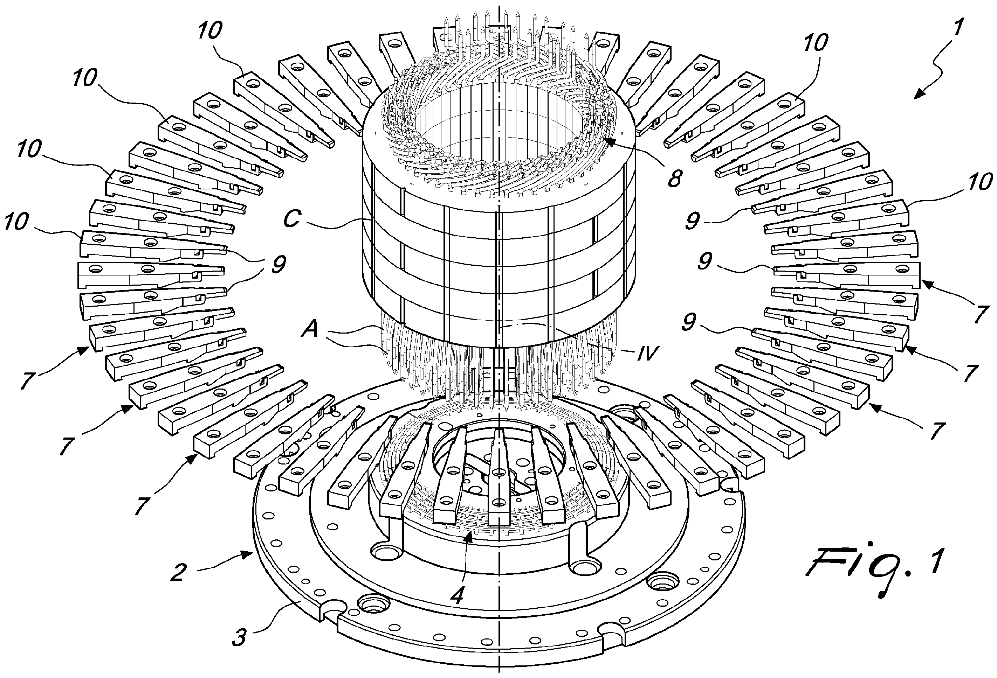

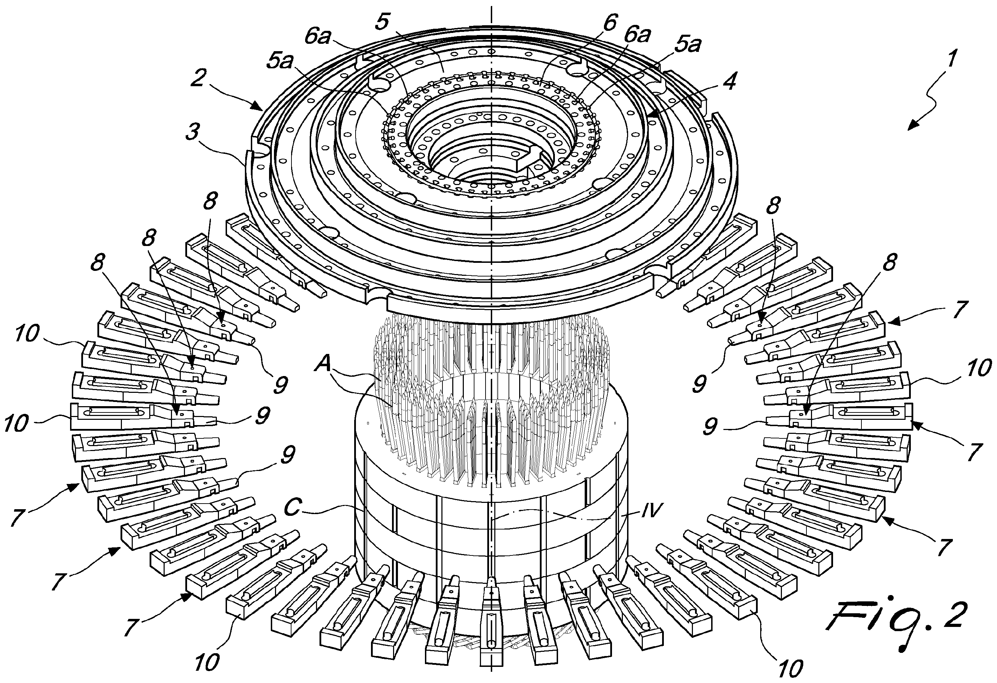

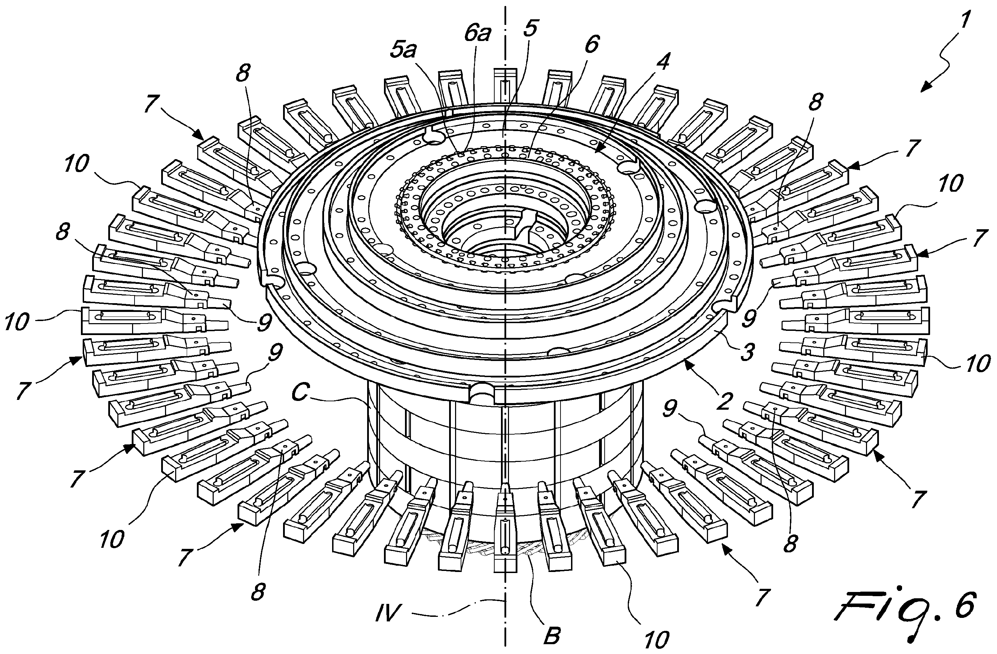

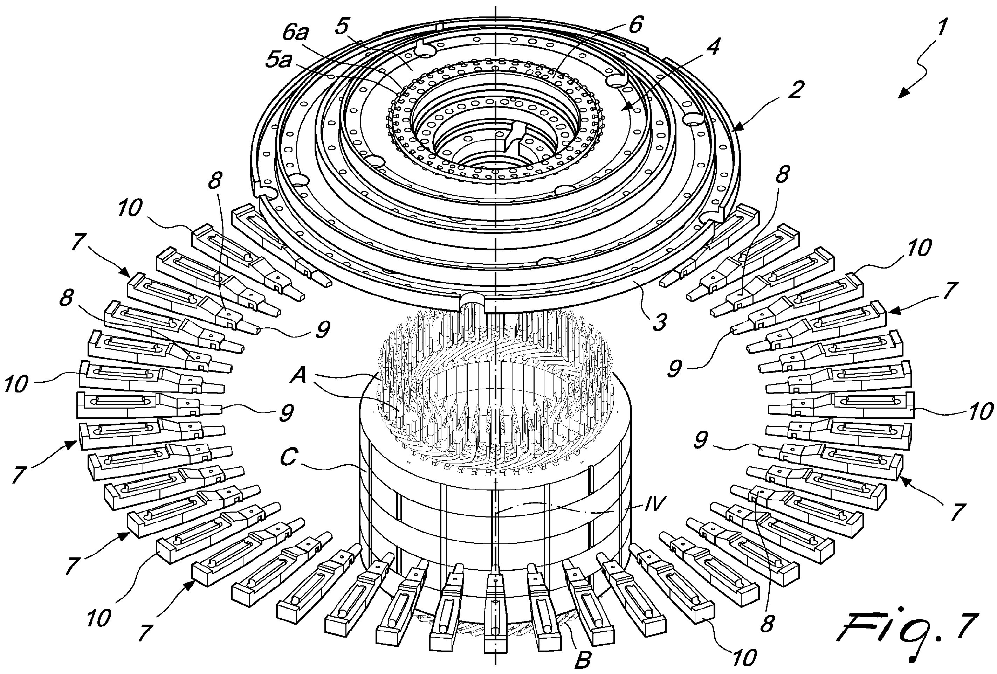

According to a preferred embodiment, the pushers 7 are efficiently movable in a radial direction between a passive configuration, in which the terminal element 9 is arranged outside the carousel 4, i.e. separate from and facing toward the wire end portions T of the wires A that protrude from the seats D of the ferromagnetic core C (the passive configuration is shown for the purposes of example in the accompanying Figures 1, 2, 6 and 7), and an active configuration, in which the terminal element 9 of each pusher 7 enters into spaces defined between the wire end portions T of wires A that protrude from the contiguous seats D of the ferromagnetic core C and are partially accommodated in the contiguous channels 5a, 6a of the carousel 4, so as to be interposed between the wire end portions T of circumferentially contiguous wires A and the front 8a of the respective shoulder 8 abuts against the wire end portion T of the wire A1 of the wires accommodated in the corresponding channels 5a, 6a (and in a corresponding seat D of the ferromagnetic core C) that is arranged outermost and is therefore nearer to the terminal element 9 of the respective pusher 7, so forcing such wire end portions T of the wires A, arranged in respective seats D of the ferromagnetic core C, against the internal, bottom walls E of said seats D, radially compacting them so as to temporarily eliminate their play inside the respective seats D, prior to the steps of twisting achieved by means of rotation of the bushings 5, 6.

However, the possibility is not ruled out of adopting an alternative embodiment in which the pushers 7 are radially inside the wire end portions T of the wires A, with the terminal element 9 further away from the axis of symmetry IV with respect to the shoulder 8 (example not shown in the figures), when they are in their passive configuration: according to this additional embodiment the kinematic sequences would be substantially inverted with respect to the embodiment described in the previous paragraph. In this additional alternative embodiment, the wire A1 will be arranged internally between the wires accommodated in the corresponding seat D of the ferromagnetic core C and the channels 5a, 6a. In this case, the walls E onto which the wire end portions T of the wires are forced would be the external walls (external with respect to the axis of symmetry IV).

This compaction of the wires A inside the seat D (the slot) of the ferromagnetic core C determines, in fact, a temporary elimination of the play present between the seat D and the wires A, which are thus locked inside the seat D (forced against the internal, bottom walls E of the respective seats D). The action of the pushers 7 and of the respective shoulders 8 is to (temporarily) eliminate the play present inside each seat D and the wires A contained in it.

The elimination of such play is an essential factor in that it makes it possible to execute twisting operations on the wires A which will be far less prone (even negligibly prone) to the phenomenon of springback.

During the study of the problems of springback of wire end portions T subjected to twisting, it was necessary to identify the mechanical characteristics of the material that constitutes the wires A, the geometric characteristics of the wires A, the characteristics of the twisting devices and the extent of the play existing between the wires A and the seats D that accommodate them.

The empirical model identified is the following:

$$\Delta D = \mu \cdot D_{theoretical} = (a \cdot \vartheta \cdot D/2 + b \cdot g - c \cdot H\_pt) \cdot D_{theoretical}$$

where:

- g is the total radial play in the slot;
- $\vartheta$ is the twisting angle;
- H_pt is the final distance between the slot of the twisting device and the stator;
- $\Delta D$ is the difference between the post-twisting outside diameter, measured experimentally, and the theoretical diameter;
- a, b, c being empirical coefficients (which must be evaluated in each instance for each geometry/material) for which the condition b > c > a is true (this demonstrates the greater influence of radial play in the slot g, associated with a multiplier coefficient of greater size).

Using this empirical model (obtainable experimentally and verifiable and extendable, for example, via the application of the Finite Element Method, FEM) it is possible to find that the parameter that has the greatest influence on the end result is the play of the wires A inside the seat D of the ferromagnetic core C: this is because the multiplier coefficient of g is greater than the other factors.

It is therefore evident that the adoption of the pushers 7 provided with shoulders 8, by ensuring the possibility of temporarily cancelling out the play in the slot (i.e. constitutes an innovation of extreme importance in a twisting apparatus 2 because it minimizes (to the point of almost eliminating) the springback of the wires A after their twisting.

With particular reference to an embodiment of undoubted practical and applicative interest, it should be noted that the pusher 7 can positively have a substantially prism-like elongated shape with the terminal element 9 tapered.

The front 8a of the shoulder 8 comprises a pair of steps 11 arranged at the flanks of the terminal element 9, which are adapted to abut against a respective wire end portion T of wire A1 which protrudes from a corresponding seat D.

With particular reference to the preferred embodiment described above, the pusher 7 is configured to perform a movement towards the axis of symmetry IV of the carousel 4 when it passes from the passive configuration to the active configuration, passing from a position further away from the axis of symmetry IV of the carousel 4, in the passive configuration, to a position closer to the axis of symmetry IV of the carousel 4, in the active configuration.

In such case the pusher 7 will preferably comprise, in its inner end part, i.e. the part that is directed toward the inside and adapted to be interposed between respective wires A arranged in contiguous channels 5a, 6a, a tapered terminal element (coinciding with the terminal element 9) which has a smaller width that the width of its outer part.

It is important to note that the shoulder 8 is arranged substantially at the connection region between the inner part of the terminal element 9 and at the outer part 10 of the pusher 7, defining two lateral steps 11 which protrude externally with respect to the inner part of the terminal element 9.

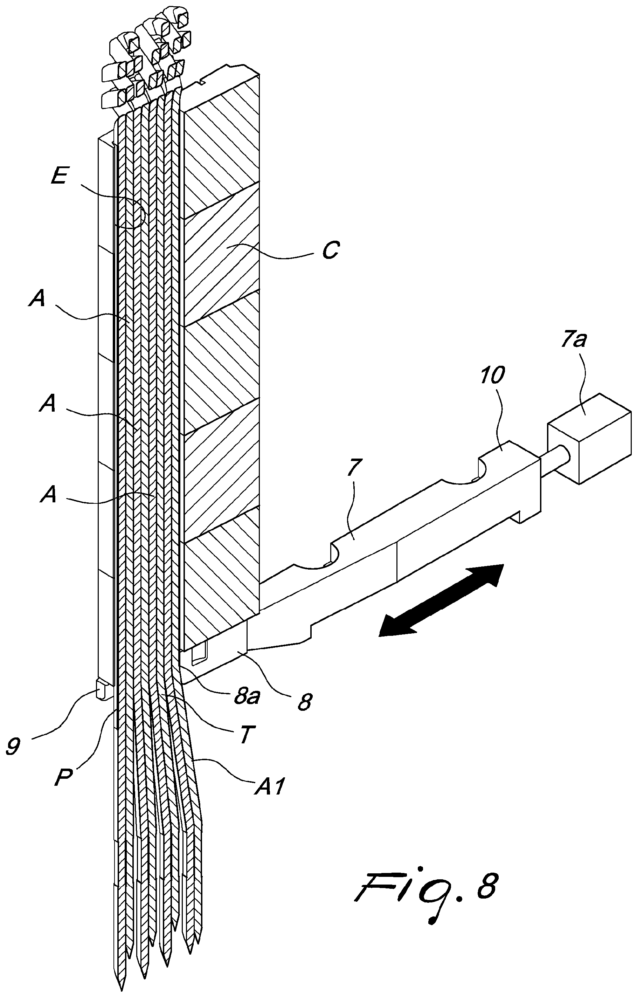

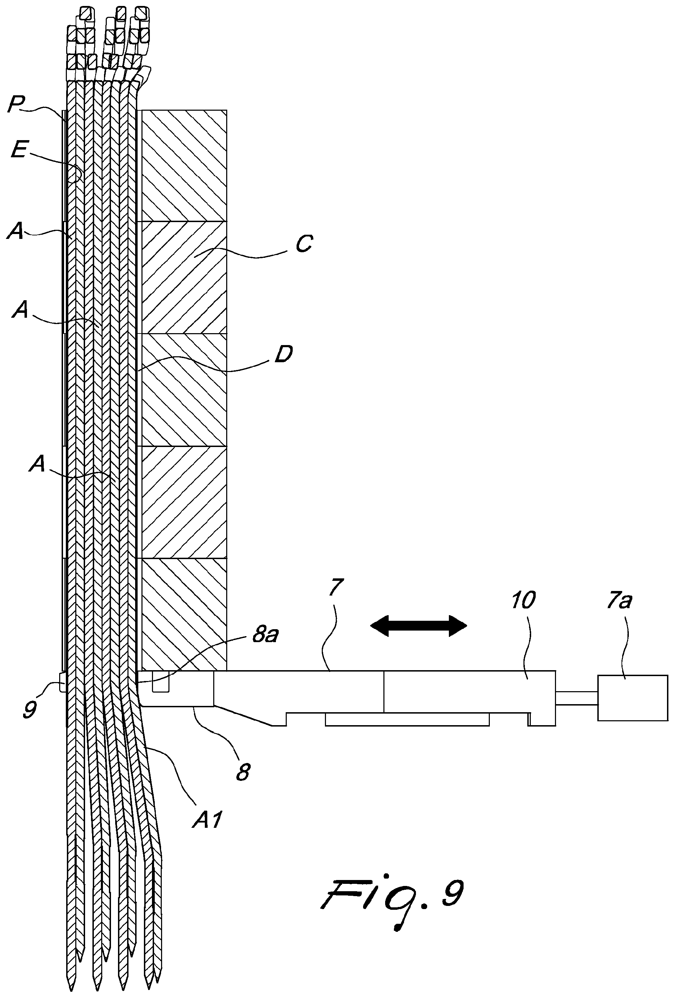

Such lateral steps 11 are adapted to abut against the wire A arranged outermost in each one of the corresponding channels 5a, 6a (and in the seat D of the ferromagnetic core C), as illustrated by way of non-limiting example in the accompanying Figures 8 and 9.

As mentioned previously, the pusher 7 comprises a terminal element 9 that can be interposed between wires A that are present in contiguous channels 5a, 6a (and also in a corresponding seat D of the ferromagnetic core C). Each seat D accommodates the respective wires A and a layer of insulating paper P interposed between its internal wall and the external surface of the wires A themselves: the function of this paper P is to electrically insulate the wires A from the ferromagnetic core C (which is constituted by an electrically conducting material, i.e. an electrical conductor) so as to prevent, in the event of damage to the layer of superficial insulation that is integral with each wire A, the flow of electric current from it to the ferromagnetic core C.

The terminal element 9 of the pusher 7 is conveniently configured for the mechanical protection of the layer of paper during the step of twisting the wires A.

In fact, while it exerts pressure on the wires A through the shoulder 8, the pusher 7, through its terminal element 9, also ensures that the layer of paper P is kept perfectly in adherence to the surface of the wires A, so preventing the movements of these wires A, caused by their twisting, from damaging the layer of paper P.

Finally it should be noted that, between the pushers 7 and the fixed body 3 at least one actuator 7a can advantageously be interposed which is configured for the synchronous radial movement of all the pushers 7. By virtue of the synchronous movement in a radial direction (which ensures the transition from the mentioned first, passive configuration to the mentioned active configuration) it is possible to intervene on all the wire end portions T of the wires A that are in the seats D of the ferromagnetic core C simultaneously, so as to avoid the application of uneven external forces on those wires A.

It should further be noted that the at least one receptacle will be defined by respective pairs of channels 5a, 6a by virtue of the fact that each one of them will be open onto the side directed toward the corresponding contiguous bushing 6, 5.

According to the alternative embodiment, the pushers 7, in the passive configuration, are inside the wire end portions T, and will therefore be adapted to force the wire end portions T toward the external walls E (external with respect to the axis IV).

The present invention also extends its protection to include a method for twisting the wire end portions of wires A that constitute windings B of electric machines.

According to the known art, such a method entails aligning a ferromagnetic core C of an electric machine which accommodates, in respective seats D, a plurality of conducting wires A which have wire end portions T that protrude from a front of such core C, with a twisting apparatus 2 for twisting such wire end portions T which comprises a fixed body 3 on which a carousel 4 can rotate which is provided with at least a pair of seats for respective wires A (in particular for the protruding wire end portions of such wires A). More precisely, the carousel 4 comprises at least two bushings 5, 6 which are circular in cross-section and are mutually contiguous, concentric and provided with respective channels 5a, 6a which are substantially parallel to the axis IV of the carousel 4, each channel 5a, 6a defining at least one receptacle.

Also according to the known art, it is necessary to insert such wire end portions T of the wires A into the channels 5a, 6a of the bushings 5, 6. Then it is possible to rotate such bushings 5, 6 according to preset angles, in so doing performing a twisting of the wire end portions T of the wires A. Then the wire end portions of the wires A can be extracted from the channels 5a, 6a.

In addition, there is a plurality of radial pushers 7 which are arranged circumferentially and positioned axially between the front of the ferromagnetic core C and the carousel 4, so that they are aligned radially at spaces defined between wires A that are arranged circumferentially consecutive and can be arranged in radially contiguous channels 5a, 6a.

In such case each one of the pushers 7 will be provided with a terminal element 9 and a shoulder 8 contiguous with such terminal element 9.

According to the invention, before the step of twisting the wire end portions T by means of the rotation of the bushings 5, 6, there is a step of moving radial pushers 7 in a radial direction from a passive configuration, in which the terminal element 9 is arranged separate from and facing the wire end portions T of wires A that protrude from the seats D of the ferromagnetic core C, to an active configuration, in which each terminal element 9 enters into spaces defined between respective wire end portions T of wires A that protrude from the contiguous seats D of the ferromagnetic core C and which are partially accommodated in the contiguous channels 5a, 6a of the carousel 4, so as to be interposed between the wire end portions T of circumferentially contiguous wires A until it abuts against the terminal element T of the wire A1 (the one closest to the pusher 7), by way of a front 8a of the respective shoulder 8.

Before the step of twisting, there is also an additional step of forcing the wires A (more precisely, their wire end portions T) that are arranged in a common seat D of the ferromagnetic core C against a wall E of the respective seat D. This step of forcing the wires A (more precisely, their wire end portions T) therefore entails their radial compaction in order to temporarily eliminate their play inside the respective seats D.

As seen previously, the elimination of the play existing between the wires A and the seat D that contains them makes it possible to minimize (even render negligible) the springback of those wires A after their twisting.

It is convenient to note that a layer of insulating paper P can be interposed between the internal wall of the seats D of the ferromagnetic core C and the wires A contained in them. Each terminal element 9 of these pushers 7 is configured in such a way that, when it is brought into interposition between wires A arranged in contiguous seats D (and therefore also in contiguous channels 5a, 6a during the twisting operations), it is adapted to keep the layer of paper P resting on the surface of the wires A that are contiguous to it (therefore maintaining this mutual arrangement of the layer of paper P and of the wires A even during the twisting operations), in this way protecting this layer of paper P from mechanical damage.

In the preferred embodiment, it should be noted that the pushers 7 are moved toward the axis of symmetry IV of the carousel 4 when they pass from the passive configuration to the active configuration, i.e., in more detail, passing from a position further away from the axis of symmetry IV of the carousel 4, in the passive configuration, to a position closer to the axis of symmetry IV of the carousel 4, in the active configuration.

In the preferred embodiment, the movement of the pushers 7 between the passive configuration and the active configuration will therefore be simultaneous, guarding against the generation of uneven stresses on the wires A of the same winding B (arranged on the same ferromagnetic core C).

In the alternative embodiment, it should be noted that the pushers 7 are moved radially away from the axis of symmetry IV of the carousel 4 when they pass from the passive configuration to the active configuration, i.e., in more detail, passing from a position closer to the axis of symmetry IV of the carousel 4, in the passive configuration, to a position farther away from the axis of symmetry IV of the carousel 4, in the active configuration.

Also in this alternative embodiment, the movement of the pushers 7 between the passive configuration and the active configuration will therefore be simultaneous, guarding against the generation of uneven stresses on the wires A of the same winding B (arranged on the same ferromagnetic core C).

In the preferred embodiment, it should furthermore be noted that the step of forcing the wires A against the wall E of the respective seat D, during which a radial forcing is performed of the wires A against the internal, bottom walls E of the respective seats D, with consequent compaction thereof, is maintained until the completion of the step of twisting.

A similar contrivance (while providing for opposite movement criteria due to the structural geometric differences described previously) will be adopted also in the alternative embodiment previously illustrated.

It should be noted that the present invention also entails a step of radially spacing the pushers 7 away from the twisting apparatus 2 prior to the extraction of the wire end portions T of the wires A from the channels 5a, 6a and after the step of twisting via rotation of the bushings 5, 6 is completed.

By virtue of the compaction of the wires A against the bottom of the seat D exerted by the pusher 7 using the walls 11 of the shoulder 8 (which abut against wires A1 of contiguous seats), during the twisting operations the wires A remain immobile inside the respective seats D and only their wire end portion T undergoes deformation.

This condition ensures that, at the end of the twisting operations, there is no springback of the wire end portions T of the wires A that could compromise the correct alignments thereof (necessary for the subsequent steps of welding).

At the same time, keeping the terminal elements 9 of the pushers 7 between the wires A also ensures a protection of the layer of insulating paper P arranged between the internal walls E of the seat D and the wires A contained in it: in this manner therefore, damage to the layer of paper P is also prevented, which could result in a non-conformance of the winding B (for the specific operation type for which it will be intended).

Finally it should be noted that in each one of the channels 5a, 6a of the respective bushings 5, 6 that define at least one receptacle, such receptacle is open and directed toward the respective contiguous bushing 6, 5.

Conveniently, by virtue of the present invention an operating mode has been identified that makes it possible to reduce (even eliminate) the play existing between the seats D of the ferromagnetic core C and the wires contained in them, before executing the twisting operations.

The twisting operations performed with the wires A thus immobilized in abutment against the walls E by the shoulders 8 of the pushers 7 will therefore be less prone to post-twisting phenomena of springback, insofar as this negative phenomenon is strongly linked to the play present between the wires A and the seats D that accommodate them (as indicated by the empirical formula given previously).

Advantageously the present invention solves the above mentioned problems, by providing an assembly 1 for minimizing the springback of electrical wires A in apparatuses 2 for twisting those wires A that is adapted to ensure an optimal alignment of the ends of corresponding shanks of separate forks (contoured wires A) made of conducting material arranged in the slots of a ferromagnetic core (such optimal alignment is ensured precisely by the fact that, by performing the twisting of the wire end portions of the wires A while these are immobilized in the respective seats D by the pushers 7, the post-twisting springback thereof will be substantially negligible because the deformations made during the step of twisting will be limited exclusively to the wire end portion T of the wire A).

Conveniently the assembly 1 according to the invention ensures that such an alignment will be stable over time, by virtue of the precise localization of the deformations due to twisting only in the wire end portions T of the wires A that are downstream of the terminal ends 9 and of the shoulders 8 of the pushers 7.

Advantageously the assembly 1 according to the invention facilitates the operations for coupling (welding) corresponding ends of shanks of separate forks (bent wires A) made of conducting material, by virtue of their precise and stable positioning at the end of the twisting.

Profitably the assembly 1 according to the invention renders the coupling (welding) of corresponding wire end portions of wires A of separate forks made of conducting material (called "hairpins" in the sector) more stable and accurate, by virtue of the fact that these will arrive at the mutual welding device in conditions of optimal alignment.

Positively the assembly 1 for minimizing the springback of electrical wires in apparatuses for twisting those wires according to the invention is easily and practically implemented and is of low cost: such characteristics make the assembly 1 according to the invention an innovation that is safe in use.

The invention, thus conceived, is susceptible of numerous modifications and variations, all of which are within the scope of the appended claims.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1. An assembly for minimizing the springback of wire end portions (T) of electrical wires (A) that are arranged in seats (D) of a ferromagnetic core (C) when they are subjected to twisting, said assembly comprising a twisting apparatus (2) which comprises a fixed body (3) on which a carousel (4) is mounted so that it can rotate, said carousel (4) comprising at least two bushings (5, 6) which are circular in cross-section and are mutually contiguous, concentric and provided with respective channels (5a, 6a) which are substantially parallel to an axis of symmetry (IV) of said carousel (4), each channel (5a, 6a) defining at least one receptacle configured to partially accommodate at least one respective wire end portion (T) of a wire (A) that protrudes from a seat (D) of a ferromagnetic core (C), and said at least two bushings (5, 6) being configured to be made rotate in order to perform the twisting of said wire end portions (T) of wires (A) that protrude from the seats (D) of the ferromagnetic core (C) and are partially accommodated in the channels (5a, 6a), wherein it further comprises a plurality of radial pushers (7) which are arranged circumferentially and are configured to be axially positioned between said ferromagnetic core (C) and said carousel (4), **characterized in** each one of said pushers (7) being provided with a terminal element (9) and a shoulder (8) contiguous with said terminal element (9), said pushers (7) being moreover movable in a radial direction between a passive configuration, wherein said terminal element (9) is arranged distally from the wire end portions (T) of wires (A) that protrude from the seats (D) of the ferromagnetic core (C), and an active configuration, wherein said terminal element (9) enters into spaces defined between the wire end portions (T) of wires (A) that protrude from the contiguous seats (D) of the ferromagnetic core (C) and are partially accommodated in said contiguous channels (5a, 6a) of the carousel (4), so as to be interposed between the wire end portions (T) of circumferentially contiguous wires (A), and wherein a front (8a) of the respective shoulder (8) abuts against the wire end portion (T) of the wire (A1) that is contiguous with the pusher (7) so as to force the wires (A) that are arranged in a common seat (D) of the ferromagnetic core (C) against a wall (E) of the respective seat (D), radially compacting them so as to temporarily eliminate their play inside the respective seats (D), prior to the step of twisting via rotation of said bushings (5, 6).

2. The assembly according to claim 1, **characterized in that** said pusher (7) has a substantially prism-like elongated shape with the terminal element (9) being tapered.

3. The assembly according to claim 1 or 2, **characterized in that** said front (8a) of the shoulder (8) comprises a pair of steps (11) arranged at the flanks of the terminal element (9), which are suitable to abut against a respective wire end portion (T) of wire (A1) which protrudes from a corresponding seat (D).

4. The assembly according to one or more of the preceding claims, **characterized in that** said pusher (7) is configured to perform a movement towards the axis of symmetry (IV) of said carousel (4) when it passes from the passive configuration to the active configuration, passing from a position further away from the axis of symmetry (IV) of said carousel (4), in the passive configuration, to a position closer to the axis of symmetry (IV) of said carousel (4), in the active configuration.

5. The assembly according to one or more of the preceding claims, **characterized in that** said terminal element (9) is dimensioned to contact a layer of insulating paper (P) interposed between an internal wall of said seat (D) and the external surface of said wires (A), so as to ensure a mechanical protection of said layer of paper (P) during the twisting of the wire end portions (T) of the wires (A) accommodated in said channels (5a, 6a).

6. The assembly according to one or more of the preceding claims, **characterized in that** it further comprises at least one actuator (7a) configured for the synchronous radial movement of all the pushers (7).

7. The assembly according to one or more of the preceding claims, **characterized in that** the at least one receptacle of each channel (5a, 6a) is open on a side directed toward the respective contiguous bushing (5, 6).

8. A method for twisting the wires (A) that constitute windings (B) of electric machines, said method including the steps of::

    - aligning a ferromagnetic core (C) of an electric machine which accommodates, in respective seats (D), a plurality of conducting wires (A) which have wire end portions (T) that protrude from a front of said core (C), with a twisting apparatus (2) for twisting said wire end portions (T) which comprises a fixed body (3) on which a carousel (4) can rotate, said carousel (4) comprising at least two bushings (5, 6) which are circular in cross-section and are mutually contiguous, concentric and provided with respective channels (5a, 6a) which are substantially parallel to an axis of symmetry (IV) of said carousel (4), each channel (5a, 6a) defining at least one receptacle,
    - partially inserting said wire end portions (T) of said wires (A) in said channels (5a, 6a) of said bushings (5, 6),
    - twisting said wire end portions (T) of wires (A) by way of the rotation of said bushings (5, 6) according to preset angles,
    - extracting said wire end portions (T) of said wires (A) from said channels (5a, 6a),
    - providing a plurality of radial pushers (7) which are arranged circumferentially and positioned axially between the front of the ferromagnetic core (C) and the carousel (4) and are aligned radially at spaces defined between wires (A) that are arranged circumferentially consecutive and can be accommodated in said radially contiguous channels (5a, 6a), each one of said pushers (7) being provided with a terminal element (9) and a shoulder (8) contiguous with said terminal element (9),

which consists, prior to said step of twisting said wire end portions (T) by means of the rotation of the bushings (5, 6), in:

    - moving said radial pushers (7) in a radial direction from a passive configuration, wherein said terminal element (9) is separate from and facing the wire end portions (T) of wires (A) that protrude from the seats (D) of the ferromagnetic core (C), to an active configuration, wherein said terminal element (9) enters into spaces defined between the wire end portions (T) of wires (A) that protrude from the contiguous seats (D) of the ferromagnetic core (C) and which are partially accommodated in said contiguous channels (5a, 6a) of the carousel (4), so as to be interposed between the wire end portions (T) of circumferentially contiguous wires (A) until it abuts against the terminal element (T) of the wire (A1) that is contiguous with the respective pusher (7) by means of a front (8a) of the respective shoulder (8), and
    - forcing the wires (A) that are arranged in a common seat (D) of the ferromagnetic core (C) against a wall (E) of the respective seat (D), radially compacting them so as to temporarily eliminate their play inside the respective seats (D), prior to the step of twisting the wire end portions (T) of wires (A) that are accommodated in said channels (5a, 6a) by means of the rotation of said bushings (5, 6).

9. The method according to the preceding claim, **characterized in that** a layer of insulating paper (P) is interposed between the internal walls of said seats (D) and said wires (A), said terminal element (9) of said pushers (7) being interposed between wires (A) arranged in contiguous seats (D) so as to keep said layer of paper (P) resting on the surface of the wires (A) that are contiguous thereto during the step of twisting of the wire end portions (T) of wires (A) accommodated in said channels (5a, 6a) by means of the rotation of said bushings (5, 6), thus protecting said layer of paper (T) against mechanical damage.

10. The method according to claim 8 or 9, **characterized in that** said pushers (7) are moved toward the axis of symmetry (IV) of said carousel (4) when said pushers (7) pass from the passive configuration to the active configuration, passing from a position further away from the axis of symmetry (IV) of said carousel (4), in the passive configuration, to a position closer to the axis of symmetry (IV) of said carousel (4), in the active configuration.

11. The method according to one or more of claims 8 to 10, **characterized in that** said step of forcing the wires (A) against the wall (E) of the respective seat (D) is prolonged until the twisting step is completed.

12. The method according to one or more of claims 8 to 11, **characterized in that** it further comprises a step of radially spacing the pushers (7) away from said twisting apparatus (2) prior to the extraction of the wire end portions (T) of the wires (A) from the channels (5a, 6a) and after the step of twisting via rotation of the bushings (5, 6) is completed.

13. The method according to one or more of claims 8 to 12, **characterized in that** in each one of the channels (5a, 6a) of the respective bushings (5, 6) that define at least one receptacle, said receptacle is open and facing towards the respective contiguous bushing (5, 6).

## Patentansprüche

1. Eine Anordnung zur Minimierung des Rückspringens von Drahtendabschnitten (T) elektrischer Drähte (A), die in Sitzen (D) eines ferromagnetischen Kerns (C) angeordnet sind, wenn sie verdreht werden, wobei die Anordnung eine Verdrehvorrichtung (2) umfasst, die einen festen Körper (3) umfasst, auf welchem ein Karussell (4) drehbar montiert ist, wobei das Karussell (4) mindestens zwei Buchsen (5, 6) umfasst, die einen kreisförmigen Querschnitt haben und einander benachbart konzentrisch und mit entsprechenden Kanälen (5a, 6a) ausgestattet sind, welche im Wesentlichen parallel zu einer Symmetrieachse (IV) des Karussells (4) sind, wobei jeder Kanal (5a, 6a) mindestens eine Aufnahme bestimmt, die ausgebildet ist, um mindestens einen entsprechenden Drahtendabschnitt (T) eines Drahts (A) teilweise aufzunehmen, dass aus einem Sitz (D) eines ferromagnetischen Kerns (C) vorsteht und wobei die mindestens zwei Buchsen (5, 6) ausgebildet sind, um zum Drehen gebracht zu werden, um die Drahtendabschnitte (T) von Drähten (A) zu verdrehen, die aus den Sitzen (D) des ferromagnetischen Kerns (C) vorstehen und teilweise in den Kanälen (5a, 6a) untergebracht sind, wobei sie weiter eine Vielzahl radialer Schieber (7) umfasst, welche in Umfangsrichtung angeordnet und ausgebildet sind, um axial zwischen dem ferromagnetischen Kern (C) und dem Karussell (4) positioniert zu werden, **dadurch gekennzeichnet, dass** jeder der Schieber (7) mit einem Klemmelement (9) und einer Schulter (8) ausgestattet ist, die an das Klemmelement (9) angrenzt, wobei die Schieber (7) außerdem in eine radiale Richtung beweglich sind zwischen einer passiven Anordnung, in welcher das Klemmelement (9) distal zu den Drahtendabschnitten (T) von Drähten (A) angeordnet ist, die von den Sitzen (D) des ferromagnetischen Kerns (C) vorstehen und einer aktiven Anordnung, in welcher das Klemmelement (9) in Räume eindringt, die zwischen den Drahtendabschnitten (T) von Drähten (A) bestimmt sind, welche von den benachbarten Sitzen (D) des ferromagnetischen Kerns (C) vorstehen und teilweise in den benachbarten Kanälen (5a, 6a) des Karussells (4) aufgenommen sind, um zwischen den Drahtendabschnitten (T) in Umfangsrichtung benachbarter Drähte (A) angeordnet zu werden und wobei eine Vorderseite (8a) der jeweiligen Schulter (8) an dem Drahtendabschnitt (T) des Drahts (A1) anliegt, der dem Schieber (7) benachbart ist, um die Drähte (A), die in einem gemeinsamen Sitz (D) des ferromagnetischen Kerns (C) angeordnet sind, gegen eine Wand (E) des jeweiligen Sitzes (D) zu drücken und sie so radial zu verdichten, um ihr Spiel in den jeweiligen Sitzen (D) vorrübergehend vor dem Schritt des Verdrehens durch Drehung der Buchsen (5, 6) auszuschalten.

2. Die Anordnung gemäß Anspruch 1, **dadurch gekennzeichnet, dass** der Schieber (7) eine im Wesentlichen prismenförmige langgestreckte Form hat, wobei das Klemmelement (9) verjüngt ist.

3. Die Anordnung gemäß Anspruch 1 oder 2, **dadurch gekennzeichnet, dass** die vordere Seite (8a) der Schulter (8) ein Paar von Stufen (11) umfasst, die an den Seiten des Klemmelements (9) angeordnet und geeignet sind an einem entsprechenden Drahtendabschnitt (T) von Draht (A1) anzuliegen, der aus einem entsprechenden Sitz (D) herausragt.

4. Die Anordnung gemäß einem oder mehreren der obigen Ansprüche, **dadurch gekennzeichnet, dass** der Schieber (7) ausgebildet ist, um eine Bewegung zur Symmetrieachse (IV) des Karussells (4) hin durchzuführen, wenn er von der passiven Anordnung in die aktive Anordnung wechselt und dabei aus einer Position weiter von der Symmetrieachse (IV) des Karussells (4) entfernt in der passiven Anordnung in eine Position näher an der Symmetrieachse (IV) des Karussells (4) in der aktiven Anordnung wechselt.

5. Die Anordnung gemäß einem oder mehreren der obigen Ansprüche, **dadurch gekennzeichnet, dass** das Klemmelement (9) dimensioniert ist, um eine Schicht aus Isolierpapier (P) zu berühren, die zwischen einer Innenwand des Sitzes (D) und der äußeren Oberfläche der Drähte (A) angeordnet ist, um während des Verdrehens der Drahtendabschnitte (T) der Drähte (A), die in den Kanälen (5a, 6a) aufgenommen sind, einen mechanischen Schutz der Papierschicht (P) sicherzustellen.

6. Die Anordnung gemäß einem oder mehreren der obigen Ansprüche, **dadurch gekennzeichnet, dass** sie weiter mindestens einen Antrieb (7a) umfasst, der zur synchronen radialen Bewegung aller Schieber (7) ausgebildet ist.

7. Die Anordnung gemäß einem oder mehreren der obigen Ansprüche, **dadurch gekennzeichnet, dass** die mindestens eine Aufnahme jedes Kanals (5a, 6a) an einer Seite offen ist, die der jeweiligen benachbarten Buchse (5, 6) zugewandt ist.

8. Ein Verfahren zum Verdrehen der Drähte (A), die Wicklungen (B) elektrischer Maschinen bilden, wobei das Verfahren folgende Schritte umfasst:

   - das Ausrichten eines ferromagnetischen Kerns (C) einer elektrischen Maschine, welche in entsprechenden Sitzen (D) eine Vielzahl leitender Drähte (A) aufnimmt, die Drahtendabschnitte (T) haben, welche von einer Vorderseite des Kerns (C) vorstehen, mit einer Verdrehvorrichtung (2) zum Verdrehen der Drahtendabschnitte (T), die einen festen Körper (3) umfasst, auf welchem sich ein Karussell (4) drehen kann, wobei das Karussell (4) mindestens zwei Buchsen (5, 6) umfasst, die einen kreisförmigen Querschnitt haben und einander benachbart konzentrisch und mit entsprechenden Kanälen (5a, 6a) ausgestattet sind, welche im Wesentlichen zu einer Symmetrieachse (IV) des Karussells (4) parallel sind, wobei jeder Kanal (5a, 6a) mindestens einer Aufnahme bestimmt,
   - das partielle Einsetzen der Drahtendabschnitte (T) der Drähte (A) in die Kanäle (5a, 6a) der Buchsen (5, 6),
   - das Verdrehen der Drahtendabschnitte (T) von Drähten (A) durch Rotation der Buchsen (5, 6) um vordefinierte Winkel,
   - das Extrahieren der Drahtendabschnitte (T) der Drähte (A) aus den Kanälen (5a, 6a),
   - das Bereitstellen einer Vielzahl radialer Schieber (7), die in Umfangsrichtung angeordnet und axial zwischen der Vorderseite des ferromagnetischen Kerns (C) und dem Karussell (4) positioniert und radial an Räumen ausgerichtet sind, die zwischen Drähten (A) bestimmt sind, welche in Umfangsrichtung aufeinander folgend angeordnet sind und in den radial benachbarten Kanälen (5a, 6a) aufgenommen werden können, wobei jeder der Schieber (7) mit einem Klemmelement (9) und einer Schulter (8) ausgestattet ist, die an das Klemmelement (9) angrenzt,

   dass, vor dem Schritt des Verdrehens der Drahtendabschnitte (T) durch Rotation der Buchsen (5, 6), in Folgendem besteht:

   - dem Bewegen der radialen Schieber (7) in eine radiale Richtung aus einer passiven Anordnung, in welcher das Klemmelement (9) von den Drahtendabschnitten (T) von Drähten (A) separat und ihnen zugewandt ist, die aus den Sitzen (D) des ferromagnetischen Kerns (C) vorstehen, in eine aktive Anordnung, in welcher das Klemmelement (9) in Räume eindringt, die zwischen den Drahtendabschnitten (T) von Drähten (A) bestimmt sind, welche von den benachbarten Sitzen (D) des ferromagnetischen Kerns (D) vorstehen und welche teilweise in den benachbarten Kanälen (5a, 6a) des Karussells (4) aufgenommen sind, um zwischen den Drahtendabschnitten (T) in Umfangsrichtung benachbarter Drähte (A) angeordnet zu werden bis es mit einer Vorderseite (8a) der jeweiligen Schulter (8) an dem Klemmelement (T) des Drahts (A1) anliegt, dass den jeweiligen Schieber (7) benachbart ist und
   - dem Drücken der Drähte (A), die in einem gemeinsamen Sitz (D) des ferromagnetischen Kerns (C) angeordnet sind, gegen eine Wand (E) des jeweiligen Sitzes (D), wobei sie radial verdichtet werden zum vorrübergehenden Ausschalten ihres Spiels innerhalb der jeweiligen Sitze (D) vor dem Schritt des Verdrehens der Drahtendabschnitte (T) von Drähten (A), die in den Kanälen (5a, 6a) untergebracht sind, mit Hilfe der Drehung der Buchsen (5, 6) .

9. Das Verfahren gemäß dem obigen Anspruch, **dadurch gekennzeichnet, dass** eine Schicht aus Isolierpapier (P) zwischen den Innenwänden der Sitze (D) und den Drähten (A) angeordnet ist, wobei das Klemmelement (9) der Schieber (7) zwischen Drähten (A) angeordnet ist, die in benachbarten Sitzen (D) angeordnet sind, um die Papierschicht (P) auf der Oberfläche der Drähte (A), die dazu benachbart sind, während des Schritts des Verdrehens der Drahtendabschnitte (T) von Drähten (A), die in den Kanälen (5a, 6a) untergebracht sind durch die Drehung der Buchsen (5, 6) aufliegend zu halten, wodurch die Papierschicht (T) vor mechanischer Beschädigung geschützt wird.

10. Das Verfahren gemäß Anspruch 8 oder 9, **dadurch gekennzeichnet, dass** die Schieber (7) zur Symmetrieachse (IV) des Karussells (4) bewegt werden, wenn die Schieber (7) aus der passiven Anordnung in die aktive Anordnung übergehen und dabei aus einer Position weiter fort von der Symmetrieachse (IV) des Karussells (4) in der passiven Anordnung in eine Position näher an der Symmetrieachse (IV) des Karussells (4) in der aktiven Anordnung wechseln.

11. Das Verfahren gemäß einem oder mehreren der Ansprüche 8 bis 10, **dadurch gekennzeichnet, dass** der Schritt des Drückens der Drähte (A) gegen die Wand (E) des jeweiligen Sitzes (D) verlängert wird, bis der Verdrehschritt abgeschlossen ist.

12. Das Verfahren gemäß einem oder mehreren der Ansprüche 8 bis 11, **dadurch gekennzeichnet, dass** es weiter einen Schritt des radialen Beabstandens der Schieber (7) von der Verdrehvorrichtung (2) vor der Extraktion der Drahtendabschnitte (T) der Drähte (A) aus den Kanälen (5a, 6a) und nach dem der Schritt des Verdrehens durch Rotation der Buchsen (5, 6) abgeschlossen ist, umfasst.

13. Das Verfahren gemäß einem oder mehreren der Ansprüche 8 bis 12, **dadurch gekennzeichnet, dass** bei jedem der Kanäle (5a, 6a) der jeweiligen Buchsen (5, 6) die mindestens eine Aufnahme bestimmen, die Aufnahme offen und der jeweiligen benachbarten Buchse (5, 6) zugewandt ist.

## Revendications

1. Ensemble destiné à minimiser le retour élastique des extrémités (T) de fils électriques (A) qui sont disposés dans des logements (D) d'un noyau ferromagnétique (C) lorsqu'ils sont soumis à une torsion, ledit ensemble comprenant un dispositif de torsion (2) qui comprend un corps fixe (3) sur lequel un carrousel (4) est monté de manière à pouvoir tourner, ledit carrousel (4) comprenant au moins deux douilles (5, 6) qui sont circulaires en section transversale et qui sont mutuellement contiguës, concentriques et pourvues de canaux respectifs (5a, 6a) qui sont sensiblement parallèles à un axe de symétrie (IV) dudit carrousel (4), chaque canal (5a, 6a) définissant au moins un réceptacle configuré pour recevoir partiellement au moins une partie d'extrémité respective (T) d'un fil (A) qui dépasse d'un siège (D) d'un noyau ferromagnétique (C), et lesdites au moins deux douilles (5, 6) étant configurées pour être mises en rotation afin d'effectuer la torsion desdites parties d'extrémité de fil (T) des fils (A) qui dépassent des sièges (D) du noyau ferromagnétique (C) et sont partiellement logées dans les canaux (5a, 6a), où il comprend en outre une pluralité de poussoirs radiaux (7) qui sont disposés circonférentiellement et sont configurés pour être positionnés axialement entre ledit noyau ferromagnétique (C) et ledit carrousel (4), **caractérisé en ce que** chacun desdits poussoirs (7) est muni d'un élément terminal (9) et d'un épaulement (8) contigu audit élément terminal (9), lesdits poussoirs (7) étant en outre mobiles dans une direction radiale entre une configuration passive, où ledit élément terminal (9) est disposé distalement par rapport aux parties d'extrémité (T) des fils (A) qui dépassent des sièges (D) du noyau ferromagnétique (C), et une configuration active, où ledit élément terminal (9) pénètre dans des espaces définis entre les parties d'extrémité (T) des fils (A) qui dépassent des sièges contigus (D) du noyau ferromagnétique (C) et sont partiellement logés dans lesdits canaux contigus (5a, 6a) du carrousel (4), de manière à être interposé entre les parties d'extrémité (T) des fils (A) contigus circonférentiellement, et où une face avant (8a) de l'épaulement respectif (8) vient en butée contre la partie d'extrémité (T) du fil (A1) qui est contiguë au poussoir (7) de manière à forcer les fils (A) qui sont disposés dans un siège commun (D) du noyau ferromagnétique (C) contre une paroi (E) du siège respectif (D), en les compactant radialement de manière à éliminer temporairement leur jeu à l'intérieur des sièges respectifs (D), avant l'étape de torsion par rotation desdites douilles (5, 6).

2. L'ensemble selon la revendication 1, **caractérisé en ce que** ledit poussoir (7) a une forme allongée sensiblement prismatique, l'élément terminal (9) étant effilé.

3. L'ensemble selon la revendication 1 ou 2, **caractérisé en ce que** ladite face avant (8a) de l'épaulement (8) comprend une paire de gradins (11) disposés sur les flancs de l'élément terminal (9), qui sont adaptés pour venir en butée contre une partie d'extrémité respective (T) du fil (A1) qui dépasse d'un siège correspondant (D).

4. L'ensemble selon une ou plusieurs des revendications précédentes, **caractérisé en ce que** ledit poussoir (7) est configuré pour effectuer un mouvement vers l'axe de symétrie (IV) dudit carrousel (4) lorsqu'il passe de la configuration passive à la configuration active, passant d'une position plus éloignée de l'axe de symétrie (IV) dudit carrousel (4), dans la configuration passive, à une position plus proche de l'axe de symétrie (IV) dudit carrousel (4), dans la configuration active.

5. L'ensemble selon une ou plusieurs des revendications précédentes, **caractérisé en ce que** ledit élément terminal (9) est dimensionné pour entrer en contact avec une couche de papier isolant (P) interposée entre une paroi interne dudit siège (D) et la surface externe desdits fils (A), afin d'assurer une protection mécanique de ladite couche de papier (P) pendant la torsion des parties d'extrémité (T) des fils (A) logés dans lesdits canaux (5a, 6a).

6. L'ensemble selon une ou plusieurs des revendications précédentes, **caractérisé en ce qu'**il comprend en outre au moins un actionneur (7a) configuré pour le mouvement radial synchrone de tous les poussoirs (7).

7. L'ensemble selon une ou plusieurs des revendications précédentes, **caractérisé en ce que** le au moins un réceptacle de chaque canal (5a, 6a) est ouvert sur un côté dirigé vers la douille contiguë respective (5, 6).

8. Procédé pour torsader les fils (A) qui constituent des enroulements (B) de machines électriques, ledit procédé comprenant les étapes consistant à :

   - aligner un noyau ferromagnétique (C) d'une machine électrique qui loge, dans des sièges respectifs (D), une pluralité de fils conducteurs (A) qui ont des parties d'extrémité de fil (T) qui dépassent d'une face avant dudit noyau (C), avec un appareil de torsion (2) pour tordre lesdites parties d'extrémité de fil (T) qui comprend un corps fixe (3) sur lequel un carrousel (4) peut tourner, ledit carrousel (4) comprenant au moins deux douilles (5, 6) qui sont circulaires en section transversale et qui sont mutuellement contiguës, concentriques et pourvues de canaux respectifs (5a, 6a) qui sont sensiblement parallèles à un axe de symétrie (IV) dudit carrousel (4), chaque canal (5a, 6a) définissant au moins un réceptacle,
   - insérer partiellement lesdites parties d'extrémité (T) desdits fils (A) dans lesdits canaux (5a, 6a) desdites douilles (5, 6),
   - tordre lesdites parties d'extrémité (T) des fils (A) par la rotation desdites douilles (5, 6) selon des angles prédéfinis,
   - extraire lesdites parties d'extrémité (T) desdits fils (A) desdits canaux (5a, 6a),
   - fournir une pluralité de poussoirs radiaux (7) qui sont disposés circonférentiellement et positionnés axialement entre l'avant du noyau ferromagnétique (C) et le carrousel (4) et qui sont alignés radialement à des espaces définis entre des fils (A) qui sont disposés circonférentiellement de manière consécutive et peuvent être logés dans lesdits canaux radialement contigus (5a, 6a), chacun desdits poussoirs (7) étant muni d'un élément terminal (9) et d'un épaulement (8) contigu audit élément terminal (9),

   qui consiste, avant ladite étape de torsion desdites parties d'extrémité de fil (T) au moyen de la rotation des douilles (5, 6), à :

   - déplacer lesdits poussoirs radiaux (7) dans une direction radiale à partir d'une configuration passive, où ledit élément terminal (9) est séparé des parties d'extrémité (T) des fils (A) qui dépassent des sièges (D) du noyau ferromagnétique (C) et fait face à celles-ci, vers une configuration active, où ledit élément terminal (9) pénètre dans les espaces définis entre les parties d'extrémité (T) des fils (A) qui dépassent des sièges contigus (D) du noyau ferromagnétique (C) et qui sont partiellement logés dans lesdits canaux contigus (5a, 6a) du carrousel (4), de manière à s'interposer entre les parties d'extrémité (T) des fils (A) circonférentiellement contigus jusqu'à ce qu'il bute contre l'élément terminal (T) du fil (AI) qui est contigu au poussoir respectif (7) au moyen d'une face avant (8a) de l'épaulement respectif (8), et
   - forcer les fils (A) qui sont disposés dans un siège commun (D) du noyau ferromagnétique (C) contre une paroi (E) du siège respectif (D), en les compactant radialement de manière à éliminer temporairement leur jeu à l'intérieur des sièges respectifs (D), avant l'étape de torsion des parties d'extrémité (T) des fils (A) qui sont logées dans lesdits canaux (5a, 6a) au moyen de la rotation desdites douilles (5, 6).

9. Procédé selon la revendication précédente, **caractérisé en ce qu'**une couche de papier isolant (P) est intercalée entre les parois internes desdits sièges (D) et lesdits fils (A), ledit élément terminal (9) desdits poussoirs (7) étant intercalé entre les fils (A) disposés dans des sièges contigus (D) de manière à maintenir ladite couche de papier (P) en appui sur la surface des fils (A) qui sont contigus à celle-ci pendant l'étape de torsion des parties d'extrémité (T) des fils (A) logés dans lesdits canaux (5a, 6a) au moyen de la rotation desdites douilles (5, 6), protégeant ainsi ladite couche de papier (T) contre tout dommage mécanique.

10. Procédé selon la revendication 8 ou 9, **caractérisé en ce que** lesdits poussoirs (7) sont déplacés vers l'axe de symétrie (IV) dudit carrousel (4) lorsque lesdits poussoirs (7) passent de la configuration passive à la configuration active, passant d'une position plus éloignée de l'axe de symétrie (IV) dudit carrousel (4), dans la configuration passive, à une position plus proche de l'axe de symétrie (IV) dudit carrousel (4), dans la configuration active.

11. Procédé selon une ou plusieurs des revendications 8 à 10, **caractérisé en ce que** ladite étape consistant à forcer les fils (A) contre la paroi (E) du siège respectif (D) est prolongée jusqu'à ce que l'étape de torsion soit terminée.

12. Procédé selon une ou plusieurs des revendications 8 à 11, **caractérisé en ce qu'**il comprend en outre une étape consistant à espacer radialement les poussoirs (7) dudit dispositif de torsion (2) avant l'extraction des parties d'extrémité (T) des fils (A) des canaux (5a, 6a) et après l'étape de torsion par rotation des douilles (5, 6) est finie.

13. Procédé selon une ou plusieurs des revendications 8 à 12, **caractérisé en ce que** dans chacun des canaux (5a, 6a) des douilles respectives (5, 6) qui définissent au moins un réceptacle, ledit réceptacle est ouvert et fait face à la douille contiguë respective (5, 6).

Fig. 1

Fig. 2

*Fig.3*

Fig.4

EP 4 537 444 B1

Fig. 5

EP 4 537 444 B1

Fig.6

Fig.7

EP 4 537 444 B1

*Fig. 8*

Fig.9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013039001 A